# EUROPEAN PATENT APPLICATION

(11) **EP 4 435 121 A1**
(43) Date of publication of application: **25.09.2024**
(21) Application number: 23305397.4
(22) Date of filing: 23.03.2023
(51) Int. Cl.: C22B 26/12

(54) **RECOVERY OF LI-SALTS FROM ORES**

(71) Applicant: K-UTEC AG Salt Technologies, 99706 Sondershausen (DE); Adionics, 91940 Les Ulis (FR)
(72) Inventor: PFÄNDER, Markus, Erfurt (DE); SCHULTHEIS, Bernd, Kyffhäuserland (DE); NEY, Christoph Wolfgang, Sondershausen (DE); ERSHOV, Denis, Sondershausen (DE); WANG, Jing, Sondershausen (DE); KLEIN, Thomas, Sondershausen (DE); DE SOUZA, Guillaume, Montcourt-Fromonville (FR)
(74) Representative: Grünecker Patent- und Rechtsanwälte PartG mbB

(57) **Abstract**

The invention relates to recovering lithium, e.g. for commercial products, such as lithium hydroxide monohydrate, lithium carbonate or low sodium lithium carbonate from solids resources with minimized energy consumption.

## Description

### BACKGROUND

The invention relates to recovering lithium, e.g. for commercial products, such as lithium hydroxide monohydrate, lithium carbonate or low sodium lithium carbonate from solids resources with minimized energy consumption.

Processes for recovering lithium carbonate or lithium hydroxide from lithium-bearing ores are commonly known. Most applied is the process based on Spodumene concentrate, which applies in many cases calcination at a temperature of about 1000 °C followed by mixing with sulphuric acid and repeated roasting at temperatures above 300 °C. Such prepared ore can be leached with water while lithium undergoes dissolution. The resulting liquid is treated with known processes to recover lithium carbonate or lithium hydroxide monohydrate. Literature also describes processes based on acid leach. Dessemond et al. ("Spodumene: The lithium market, resources and processes "; Minerals 2019,9,334; MDPI) and Crocker, Lien et al. ("Lithium and its recovery from low-grade Nevada clays"; Bureau of Mines; 1980) provide an overview of different processes to extract lithium from solid raw materials, including downstream processing among numerous other publications.

Most process schemes look very similar, mainly depending on the Li-containing ore. An example from 2010 would be the US8431005 patent from Western Lithium Corp, which starts with ores such as Hectorite Montmorillonite. The process includes mixing the ore with solid carbonate and sulphate sources, then calcinating at high temperatures of about 1000 °C and subsequent water leaching. The downstream process comprises separating the leached components, mainly sulphates of lithium, sodium and potassium. Separation of sodium and potassium is done solely with thermic process steps, while the final product Li₂CO₃ - after a final purification step - is precipitated by adding an aqueous carbonate source.

In 2011, the WO2011082444 patent application from Galaxy Resources LTD was published based on a process using Alpha-Spodumene. As a first step, high temperatures convert the Alpha-Spodumene to Beta-Spodumene. Sulphation of Beta-Spodumene at elevated temperatures follows, which enables the lithium to dissolve as Li₂SO₄ in water. After leaching, the downstream process considers purification of the leach brine using a combination of impurity precipitation - for instance, CaCO₃ - and impurity removal by ion exchange. The final step is the precipitation of Li₂CO₃ by adding an aqueous carbonate source before the product finishing.

Shantou Fanshi mining's 2015 patent application WO2017096646A1 relates to a manufacturing process for high purity lithium carbonate, which includes the following steps:
High-temperature calcination, grinding, mixing with a carbonate-containing raw brine under grinding, roasting, mixing with soda solution, filtering and mixing the filter residue with a lithium waste, ground raw material and sulphuric acid for roasting, and conducting subsequent leaching with water. The obtained leaching solution is neutralized with soda solution resulting in the precipitation of pure lithium carbonate, separated and dried.

The invention CN108017072A of Yu Chengchen, filed in 2016, also starts with Alpha-Spodumene, which is processed similar to the previously described process. Differently from the previous descriptions, sulphuric acid leach follows directly after the first calcination step. Afterwards, the solution is neutralized and purified from calcium, magnesium, iron, and aluminum to generate a concentrated Li₂SO₄ solution. The final step is again the precipitation of Li₂CO₃ by adding an aqueous carbonate source.

The University of Sydney invented a new approach filed as WO2018157203A1 in 2017. It starts with milling the lithium-bearing ore, followed by an optional calcination step. Such prepared ore is then mixed with water to create a slurry. Leaching is executed with pressurized CO₂ at an elevated temperature to extract Li₂CO₃, dissolved in water. Further processing comprises concentration and optional purification of the leach solution, applying one of the following methods evaporation, reverse osmosis, electrodialysis, liquid-liquid extraction, selective adsorption, solid-state extraction and membrane separation.

The Wuhan University of Technology invented the approach filed in 2017 as CN107265485A. Leaching with sulphuric acid and evaporation to concentrate the leaching solution follows the mixing of Spodumene and a fluorine-containing compound, milling and calcination at between 200 °C and 600 °C. Adding hydrogen peroxide and an alkaline compound purifies the concentrated solution of Al, Mg and Fe by precipitation. After adding an aqueous carbonate source, Li₂CO₃ precipitates in the final stage of the process.

CN108557848A, filed by PingXiang Tuoyuan Industries and Co. Ltd. in 2018, started with Lepidolite mixed with other raw materials, calcinated at high temperatures and leached with water to generate the typical Li₂SO₄ brine with impurities. Subsequent addition of calcium hydroxide, sodium carbonate, and ammonium oxalate precipitates the impurities from the leach solution enabling filtration to create a purified feed for downstream processing. After adding an aqueous carbonate source, Li₂CO₃ precipitates as the final product.

In 2019 the university of Fuzhou extracted Li₂SO₄ directly from Alpha-Spodumene by grinding to a particular grain diameter and then adding sodium sulphate, an additive and water, reacting at a specific temperature and pressure. Document CN110526264A describes this invention.

The documents CN112607754A, CN112591772A, CN112456520A, CN112707415A and CN112645364A, invented by Guangxi Tianyuan New Energy Mat Co Ltd in 2020, describe similar approaches to produce lithium hydroxide from Spodumene. The invented processes comprise numerous steps, including crushing, calcination, cooling, grinding, acidification, leaching, evaporation and recrystallization. Additional lithium sources introduced at different points are salt lake brines, ores, or lithium polymer material, depending upon the variants of the invention.

Tesla invented a lithium extraction process, filed as WO2021138345A1 in 2021. The core of the invention is a clay mineral preparation process that avoids a thermal energy-intense calcination step by mixing the clay with cation sources, followed by high-energy grinding upstream to a leach process to create a Li-rich solution. Known technologies process the resulting Li-rich solution.

All of the processes of the prior art are highly energy-consuming. Enriching and extracting lithium from the leach liquor, e.g. by evaporation, requires high levels of thermal energy.

Thus, the objective technical problem underlying the present invention is to provide means and methods for lithium extraction from raw materials, which are improved and less energy-consuming than the prior art.

"Raw material" or "lithium raw material" are solids comprising lithium, e.g. ores, such as Spodumene, Lepidolite, Petalite, Amblygonite, Eucryptite, Virgilite, Montebrasite, Jadarite, Zinnwaldite, Hectorite, Bikitaite or black masses from different types of spent lithium batteries based on oxides, spinels or phosphates as cathode materials.

The present inventors, while seeking to solve this problem, found that none of the prior art processes considers that lithium extraction from raw material uses anions optimized for leaching that are not necessarily optimum for selectively extracting lithium from a leach solution. Moreover, the prior art's extraction processes use thermal energy to evaporate water from the leach solution and concentrate lithium salts. The present inventors targeted low energy-consuming processes. They surprisingly found that selecting particular anions is useful for lithium enrichment in leach liquor. They further surprisingly found that reagents for purification could be saved or rendered obsolete if adding particular anions to the leach liquor.

### SUMMARY OF THE INVENTION

The invention accordingly provides in a first aspect a method to recover lithium from raw material comprising adding an anion (A), as acid or solid (e.g. solid salt) compound, to the lithium raw material, wherein (A) is useful for improving lithium leaching, i.e. increasing the amount of lithium in the leach solution, and adding an anion (A), as a salt or an acid, wherein (A) is beneficial for selective lithium extraction from the leach solution, which is an aqueous leach solution. The selection of the optimum anion (A) is driven by availability, thermal behavior of the salts corresponding to the anion and the capability to attack Li-O bonds of the aluminosilicates to initiate a cation exchange and bonding affinity to the lithium cation.

This method optimizes lithium leaching and the selective extraction of lithium from the leach liquor such that the consumption of reagents for purification of the lithium brines becomes obsolete under minimum efforts for brine concentration. Furthermore, in another aspect of the invention the method is not limited to lithium and is transferable to other valuable alkali ions, non-ferrous metals or rare earth elements.

The basic idea underlying the present invention is to provide an anion (A) to the solid lithium resource ideally suited for lithium leaching and a second anion (A) specifically for selective lithium extraction from the leach solution. This approach enables a preferred leaching process which is a closed loop of liquids without evaporation of one of the solutions. Purification, i.e. removal of impurities of the leach brine, preferably becomes obsolete in this way. With the circulation of the leach liquor, there is the option to recover the anion (A) as a salt containing the cation (Q) introduced during the downstream processing of the lithium recovery process. After selective lithium extraction, the lithium recovery process may also comprise the recovery of at least the anion (A) to recirculate it. Surprisingly, it is possible to recover salts or acids containing the respective anion (A) after lithium extraction using methods known in the art. Only minimal losses of the anion (A) due to entrained brine in the recovered solids have to be compensated for, depending on the effort required to wash out the entrained brines.

The invention also comprises a method to produce lithium carbonate, lithium hydroxide monohydrate or low-sodium lithium carbonate comprising the steps of the above method of the first aspect.

A second aspect of the invention provided is the use of an anion (A) for selectively transferring lithium from a leach solution to another phase, e.g. an organic phase, a column such as an ion-exchange chromatography column, or a solid phase, e.g. obtained by a precipitation step using additives. The extracted lithium is preferably re-dissolved in an aqueous solution, wherein the re-dissolved lithium is higher in its concentration than the leach solution. The re-dissolved lithium solution ("re-extraction solution") is more-preferably low concentrated in other impurities, preferably free of other anions than (A). The re-dissolved lithium solution is surprisingly low in other cations, especially Na, Ca, and Al. The second aspect allows for a selective concentration or enrichment of lithium as a salt, whereas other metal salts are not relevantly concentrated, e.g. the other cations in total are less than 1:1 or preferably1:2 in their ratio compared to lithium (wt/wt), preferably the other cations in total are less than 1:5 in their ratio compared to lithium (wt/wt) in further more preferred embodiments this ratio is lower than 1:50 most preferably lower than 1:100 depending upon the effort related with the direct extraction of lithium compared to saving of effort related with the downstream processing with decreasing ratio of other cations to lithium in the re-extraction solution.

In a preferred embodiment of the second aspect, the use of an anion (A) for selectively transferring lithium from a leach solution to another phase does not contain a step of concentrating lithium by reducing the amount of leach solvent, e.g., evaporating the solvent (e.g. water) to concentrate lithium as a salt.

More preferably, the use of the second aspect further comprises adding an anion (A) to a lithium-containing raw material to improve the leaching yield of lithium from the raw material and to obtain the leach solution.

A third aspect of the invention provides a method for recovering a by-product containing the anion (A) and the cation (Q) and/or any other co-extracted cation from the leach solution before or after lithium depletion. An appropriate method to recover the by-product after lithium depletion preferably comprises a cooling crystallization step crystalizing the salt (*Q_{a'}A'_{q}*) formed from cation (Q) and anion (*A'*). Before lithium depletion salting (*Q_{a'}A'_{q}*) out by adding another salt of the cation (Q) may be performed by displacement crystallization.

### DETAILS OF THE INVENTION

According to the present invention, the lithium in the raw material is leached in an aqueous solution by adding anion (A), preferably using an acid of the anion (*A'*) (e.g. H*_{a'}A'*), e.g. by adding an acidic aqueous solution which dissolves the lithium in the raw material to form a dissolved salt (e.g. Li*_{a'}A'*). Leaching may comprise pre-treatment of the raw material with the anion (*A'*) being added as salt (e.g. *Q*'_{*a*'}*A*'_{*q*'} where (*Q*') = any metal ion, a' and q' are indices, which define integers between 1 and 3 depending on the valence of the cation (*Q*') and the anion (A), respectively). Optionally further additives are added, or as the acid of the anion (A) (e.g. H*_{a'}A'*) is added optionally with further additives. "Additives" may be chlorides, sulphates or carbonates of alkaline and alkaline earth elements. Carbonates include aqueous solutions of CO₂.

(A) is an anion selected from fluoride, chloride, chlorate, perchlorate, bromide, hydroxide, sulphate, nitrate, phosphate, carbonate, silicate, and borate. Preferably, (A) is an anion selected from chloride, sulphate, nitrate or carbonate.

The leach solution, i.e. the solution obtained after leaching, contains the lithium salt at a low concentration, which is too low to effectively crystallize a lithium salt because of the high solubility of these lithium salts. The lithium salt may be lithium carbonate or lithium hydroxide. For further enriching lithium in the leach solution, in the prior art, concentration steps are standardized and generally included in lithium recovery processes based on the raw material available. E.g. evaporation, precipitation using fluorides, phosphates or carbonates of alkaline elements, membrane processes like nanofiltration or reverse osmosis, solvent extraction or adsorption processes are used to concentrate lithium in the leach solution. In processes wherein a high-grade raw material such as Spodumene concentrate is used, lithium can be recovered directly as lithium carbonate after leachate purification. The invention does not cover these applications but rather low-value raw materials where the leaching solution is more complex in cations or the lithium concentration is too low for effective direct recovery of the lithium as lithium carbonate. The invention compensates for this disadvantage of the low-value lithium-containing solid raw materials.

Since not only lithium has been dissolved with the leaching step but also other cations like alkali or alkaline earth ions, borates, aluminum ions, silicates, iron or other non-ferrous metals ions are present in the leach solution, purification and separation steps is required to obtain a solution not impaired by other components. In the prior art, these impurities are often selectively removed.

According to the present invention, it is advantageous to selectively separate lithium from the leach solution and concentrate it in an aqueous solution. Here, the present invention in one embodiment uses lithium extraction, e.g. of commonly known lithium extraction technologies (DLE, "direct lithium extraction"). During extraction, according to the present invention, lithium is
A) removed from the leach solution, e.g. transferred to another phase, for example:
   a1) transferred to a solid adsorbent or
   a2) transferred to a liquid organic phase,
   and transferred back to an aqueous solution; or
B) precipitated and re-dissolved in an aqueous solution.

The so obtained aqueous solution denominated "re-extraction solution" herein. It is, in either case, preferably higher concentrated in lithium than the original leach solution. In a preferred embodiment, the re-extraction solution contains lithium in an amount that is increased at least 2-fold compared to the leach solution, more preferably at least 4-fold compared to the leach solution, in another preferred embodiment at least 5-fold compared to the leach solution, in another preferred embodiment at least 7-fold compared to the leach solution, in another preferred embodiment at least 10-fold or more compared to the leach solution, in another preferred embodiment at least 15-fold or more compared to the leach solution, in a most embodiment at least 25-fold or more compared to the leach solution. The downstream processing of a so obtained enriched aqueous lithium solution depends on the final lithium product.

In one embodiment for lithium extraction, according to the present invention, an adsorbent is used, e.g. alumina, manganese oxide and/or titanium oxide, or any mixtures thereof, may be used as an adsorbent to which lithium is loaded. In this embodiment, the adsorbent may be added to the leach solution to adsorb lithium as a cation. In this embodiment, a ratio of one ton of adsorbent per 0.1 kg to 100 kg lithium may be added. Preferably, the temperature is kept at between 0 °C and 120 °C.

In another embodiment, the leach solution is added to a column filled with an adsorbent (e.g. alumina, manganese oxide and/or titanium oxide). More preferably, lithium is loaded to the adsorbent in an amount between 0.1 kg to 100 kg per one ton of adsorbent and even more preferably lithium is loaded to the adsorbent at a working temperature between 0 °C and 120 °C. After adsorption, the lithium-packed adsorbent is rinsed with an aqueous solution, preferably an acid, comprising the anion (A) to desorb the lithium after adsorption. In this embodiment, the anion (A) is used as desorption means, which transfers lithium back into an aqueous solution and forms an aqueous re-extraction solution containing dissolved the dissolved salt of lithium and anion (A) (e.g. Li*ₐA*) optimized for downstream processing. The solution comprising of lithium and anion (A) (e.g. Li*ₐA*) is preferably saturated. In this embodiment, wherein (A) acts as a desorption means, (A) is preferably a chloride, bromide or sulphate ion. Preferred is an obtained lithium concentration above 0.1 %, i.e. > 0.1 wt%, and most preferable above 1 % in weight, i.e. > 1 wt%.

In another embodiment, the present invention uses the anion (A) for lithium extraction by applying the adsorption of salt of lithium and anion (A) (e.g. Li*ₐA*) to an adsorbent. In this embodiment, the leaching solution already contains the anion (A) after its addition to the leaching solution before lithium extraction. An adsorbent is used, which selectively adsorbs salt of lithium and anion (A) (e.g. Li*ₐA*). In one preferred embodiment, the adsorbent is alumina suitable to absorb salt of lithium and anion (A) (e.g. Li*ₐA*). In this embodiment, wherein (A) helps adsorbing to an adsorbent, the anion (A) is preferably chloride or bromide. The lithium load in this embodiment, is preferably between 1 kg to 10 kg per ton of adsorbent. The working temperature for the adsorption process is even more preferably between 0 °C and 120 °C and most preferably between 20 °C and 100 °C. Rinsing with an aqueous solution desorbs the salt of lithium and anion (A) (e.g. Li*ₐA*) from the adsorbent. Preferably, the aqueous solution is a solution of the pre-concentrated salt of lithium and anion (A) (e.g. Li*ₐA*), most preferably up to 1 gram per litre lithium to desorb the salt of lithium and anion (A) (e.g. Li*ₐA*), thereby forming a re-extraction solution containing the dissolved the salt of lithium and anion (A) (e.g. Li*ₐA*) optimized for downstream processing. The method frequently provides the adsorbent as a solid bed percolated by the aqueous solutions. Carrying out the adsorption and desorption process in agitated vessels is an alternative but requires additional solid-liquid separation to transfer the lithium salt pregnant adsorbents to the desorption step and the impoverished ones to the adsorption step.

In another embodiment, anion (*A*) is used to carry lithium into a liquid organic phase. Here, the anion (*A*) is added to or present in, e.g. when added before leaching, the leaching solution containing lithium and the anion (*A*), and an organic solvent suitable to dissolve the salt of lithium and anion (*A*) (e.g. Li*ₐA*) is added. The anion (*A*) suitable to dissolve the salt of lithium and anion (*A*) (e.g. Li*ₐA*) in a liquid organic solvent is preferably chloride, bromide or nitrate. If the salt of lithium and anion (*A*) (e.g. Li*ₐA*) is re-dissolved in an aqueous solution using an acidic medium (pH < 7, preferably pH < 6), the anion (*A*) is more preferably chloride, bromide, or sulphate. A neutral medium (6 < pH < 8) for re-dissolving chloride, bromide, and nitrate is preferable to an acidic one (pH < 6). The liquid organic solvent may contain lithium ion exchange molecules/extractants based on hydrophobic organic compounds allowing lithium complexation, taken from, and not limited to functionalized calixarene, hydrophobic 14-crown-4 ether, or hydrophobic [2.2.1] or [2.1.1] cryptand, in combination to anion solvating molecules based on hydrophobic and protic organic compounds allowing anionic compound solvation for (Li*ₐA*) solvation, extraction and dissolution in common organic diluents selected from kerosine, ethers, halogenated alkanes, polar aromatic solvents or mixtures thereof. Preferably, the working temperature for this phase transfer process of the salt of lithium and anion (*A*) (e.g. Li*ₐA*) to the organic liquid phase is between 0 °C and 50 °C, more preferably between 10 °C and 40 °C. Subsequently, the salt of lithium and anion (A) (e.g. Li*ₐA*) is re-extracted from the organic phase by contacting the organic liquid phase with an aqueous solution, e.g. an acidic or neutral aqueous solution, preferably at a working temperature between 40 °C and 120 °C, more preferably between 60 °C and 100 °C, to re-dissolve lithium and the anion (A) into the aqueous re-extraction solution to form the dissolved salt of lithium and anion (A) (e.g. Li*ₐA*). Preferred is an obtained lithium concentration above 0.1 w% and most preferable above 1 w%. The extraction and re-extraction are based on an equilibrium reaction of lithium and the anion (*A*) with the extractant, wherein lithium and the anion (*A*) preferably pass into the organic phase with the extractant at low temperatures and preferably back into pure water at high temperatures.

In still another embodiment, anion (*A*) is used as a means to co-precipitate lithium from the leach solution. Here, the anion (*A*) is added to or present in, e.g. added before leaching, the leaching solution containing lithium. In addition to the anion (*A*), a further reagent is added to co-precipitate the salt of lithium and the anion (*A*) (e.g. Li*ₐA*, wherein a is the valence of the anion (*A*)) in a complex with the reagent. In this embodiment directed to co-precipitation, the anion (*A*) is preferably chloride, bromide, fluoride, nitrate or phosphate. Preferably, a watersoluble non-ferrous metal salt is added as a further precipitating reagent. More preferably, the further reagent is a non-ferrous metal salt containing the anion (*A*). Most preferred are lithium metal oxides based on aluminum, iron (III) or manganese (III), lithium aluminiumoxy chlorides or sulphates, lithium phosphates or lithium fluorides. In one embodiment, the pH value may be raised to form a precipitate containing the salt of lithium and anion (*A*) (e.g. Li*ₐA*) and a non-ferrous metal hydroxide. Preferably, the working temperature for the co-precipitation process is between 0 °C and 100 °C, more preferably between 10 °C and 50 °C. Most preferably, the non-ferrous metal salt is added in a stoichiometric relation of 1:1, referring to lithium in the leach solution. In this embodiment, the pH value may be raised to form a precipitate containing the salt of lithium and anion (*A*) (e.g. Li*ₐA*) and a non-ferrous metal hydroxide. After separating the solid precipitate from the leach solution, e.g. by filtering the precipitate from the leach solution, the precipitate is re-dissolved with an aqueous re-extraction solution pre-concentrated in (Li*ₐA*) up to 1 gram per litre lithium to selectively dissolve the lithium and the anion (*A*) to form a solution containing dissolved (Li*ₐA*) optimized for downstream processing. Re-dissolution using an acid containing the anion (*A*) creates an aqueous solution with the preferred lithium concentration above 0.1 wt% and even more preferred above 1 wt%.

The examples below refer to the application and the advantages of the invention. As demonstrated in the example 1, a selective lithium enrichment by adding phosphate as anion (*A*) initiating lithium phosphate precipitation can be obtained. The precipitate is re-dissolved using hydrogen carbonate to obtain a re-extraction solution enriched in lithium cations. This example provides the advantage that valuable by-products from the used reagents are obtained simultaneously, namely CaHPO₄, which is an animal nutrient and CaCO₃, which is a white pigment precursor. The use of ammonium phosphate has the advantage that this cation can be removed easily from the process cycle. The concentration effect through the precipitation of Li₃PO₄ enables a direct application of lime as a hydroxide source for the subsequent lithium hydroxide production according to known process steps from the mother liquor after CaHPO₄ recovery. Evaporation is only executed after raising the pH value by liming, which is typical for lithium hydroxide monohydrate production using lithium carbonate and lime as a hydroxide source. Example 2 demonstrates the energy-saving potential as lithium in the leach solution is concentrated approximately about factor 8 after solvent extraction and re-extraction with water. The remaining brine after direct lithium extraction can be returned to the leaching process for a renewed leach of lithium. The sodium chloride used, which is necessary to provide chloride, is used to convert lithium sulphate (resulting from a state-of-the-art lithium leaching process) into lithium chloride. A slight excess is essential; therefore, some NaCl remains in the leach solution after direct lithium extraction. It is not considered a loss if this solution is used cyclically for the leaching procedure.

The invention also allows DLE processes implementation that are not particularly effective but only significantly reduce the lithium concentration in the leaching solution. By recycling the lithium-depleted leaching solution to the leaching process, the non-extracted lithium is not lost, but only the circulating volume flow is increased compared to more effective DLE processes if achieving the same production rates is the goal. This advantage increases the range of applications and allows the process to be adapted more flexibly to specific conditions of the project.

Due to the depletion of the lithium from the leach solution, it is possible to reuse the depleted leach solution, whereby other solution components are not extracted from the leach brine. The leach solution depleted in lithium may still contain the anion (*A*') used as a counter ion for lithium during its dissolution to form the leach solution. The anion (*A'*) remains in the leach solution, while another anion (*A*) may be recovered through internal recycling from downstream process steps combined with lithium. After the repeated use of the leach solution including (*A'*), meaning for dissolving lithium from the raw material and selectively extracting lithium using the anion (*A*) (and not *A'*), the anion (*A'*) becomes enriched until saturation. The anion thus can be crystallized as a defined compound bearing the anion (*A'*) by causing an oversaturation using cooling crystallization, evaporative crystallization or displacement crystallization, e.g. by adding a suitable salt or cation. Alternatively, the anion (*A*') may be precipitated during leaching, forming a solid mixture of the anion's salt and leach residue. Preferably, a generated crystallized or precipitated salt of the anion (*A*') is suitable for the lithium leaching step or can be commercialized.

After the selective lithium extraction, according to the present invention, lithium is re-dissolved in or transferred back into an aqueous solution in which the concentration of lithium is much higher in the presence of essentially fewer cations other than lithium than in the leach solution.

In some embodiments, selective lithium extraction using an adsorbent, solvent, or precipitate is performed without prior addition of the anion (*A*). In that case, the anion (*A*) is added during the transition of the adsorbent into the aqueous solution or during the re-dissolution of the precipitate. Anion (*A*) is selected from fluoride, chloride, chlorate, perchlorate, bromide, hydroxide, sulphate, nitrate, phosphate, carbonate, silicate, or borate as anion (*A*). Preferred anions for transfer into or re-dissolution into water are chloride, sulphate, nitrate, carbonate or bicarbonate. Chloride is the very most preferred anion (*A*).

Preferably the selective extraction, e.g. precipitation and re-dissolution or removal from water, including transfer to another phase and transfer back to an aqueous solution, are executed in a manner that a negligible amount of other cations than lithium and no or a negligible amount of maximum three other anions than the anion (*A*) are present in the re-extraction solution. The lithium concentration in the re-extraction solution typically will amount to at least 0.5 kg per cubic metre, more preferably more than 1.0 kg per cubic metre, and even more preferably more than 2.0 kg per cubic metre. In order to carry out the downstream process maximizing the energy- and lithium-efficiency, the lithium concentration is preferentially higher than 3 kg per cubic metre, more preferably more than 5.0 kg per cubic metre and most preferentially higher than 10 kg per cubic metre. Most essential and purpose of the combination of selective lithium extraction is that the lithium concentration starts from a significantly higher concentration level in the re-extraction solution than it is in the leach solution and contains significantly fewer cations. The re-extraction solution contains preferably hardly any other anions than the anion (*A*), all of which concentrated to less than a hundred parts per million in the re-extraction solution.

Preferably, the re-extraction solution contains the dissolved salt (e.g. Li*ₐA*). Recovery of the anion (*A*) occurs as salt dissolved in or crystallized from an aqueous solution or as an acid.

Providing the optimum anion (*A*) for the selective lithium extraction from the leach solution and preferably recovering anion (*A*) in the process steps following the extraction enables the invention to allow cost-effective production of highly pure lithium, e.g. of battery-grade lithium hydroxide monohydrate and a very high purity lithium carbonate since the consumption of reagents and thermal energy is minimized. The present invention comprises the circulation of the anion (*A*) selected from halides, hydroxide, sulphate, nitrate or phosphate, either as an aqueous solution or in crystalline form.

The present invention allows for improved production of lithium carbonate, low-sodium lithium carbonate and low-sodium lithium hydroxide monohydrate compared to the prior art. The present invention allows for more environmentally friendly lithium production, consumes fewer raw materials and reagents, has lower overall energy consumption, and may operate in zero-liquid-discharge mode.

In a preferred embodiment for battery-grade lithium carbonate production, the further processing of the re-extraction solution comprises adding carbonate (Q*₂*(CO₃)*_{q}* where (*Q*) = any cation, *q* is the valence of the cation (*Q*)) to precipitate lithium carbonate in a mother liquor containing lithium carbonate and the salt (*QₐA_{q},* a *and q* are the valences of the anion (*A*) and the cation (*Q*), respectively). Any cation among the group alkali metals, alkaline earth metals or ammonium, preferably sodium, potassium, magnesium, or calcium, may be the cation (*Q*). This embodiment preferably employs a minimum lithium concentration of 10 kg per cubic metre in the re-extraction solution to achieve an effective primary lithium carbonate yield. If achieving this minimum requirement is impossible, concentration, e. g. evaporation, may be used to concentrate further. The salt (*QₐA_{q}*) and, therefore, the anion (*A*) may be recycled, either in a solid form after crystallization from the lithium carbonate mother liquor or as mother liquor in which the salt (*QₐA_{q}*) is dissolved. The anion (*A*') recovery can be considered independently from the lithium carbonate production by applying the steps mentioned above.

In a further embodiment, lithium hydroxide monohydrate is produced using the re-extraction solution for electrochemical conversion into LiOH. The re-extraction solution may comprise the acid (H*ₐA*, a is the valence of anion (*A*)). Lithium hydroxide monohydrate may be crystallized from the obtained solution by methods known in the art. Acid recycling provides the anion (*A*) for re-extraction and may support the leaching process. If not required in leaching, a recycled solution comprising anion (*A*) flows directly to re-extraction. In a preferred embodiment for high purity lithium hydroxide monohydrate, evaporation of the re-extraction solution yields almost quantitatively in a not fully purified salt (Li*ₐA*, a is the valence of anion (*A*)). Subsequent purification treatment may become necessary. According to the known method (European patent application No.: 21 210 659.5, filed 26 November 2021), the sufficiently pure salt (Li*ₐA*) applies as feed material to salt out lithium hydroxide monohydrate from a catholyte solution after electrochemical conversion of water and (Li*ₐA*) into LiOH and the acid (H*ₐA*). The recycling of the acid (H*ₐA*) and the mother liquor of the evaporation process to the leaching process complete the processing circuit.

Electrochemical conversion of the salt (Li*ₐA*) may also be the basis for producing low sodium or sodium-free lithium carbonate. The re-extraction solution is sufficiently concentrated and directly undergoes an electrochemical conversion process. The stream is fed to the catholyte solution to convert the salt (Li*ₐA*) into LiOH while the anion (*A*) passes through an ion exchanger membrane and combines with hydrogen formed in the anolyte chamber to the acid (H*ₐA*). Part of the catholyte stream undergoes in a reaction vessel consisting of a draft tube and an integrated clarification zone a reaction with fed CO₂ to form low sodium or sodium-free lithium carbonate. The processing route for preparing lithium hydroxide monohydrate can also be used for this purpose, as long as LiOH remains dissolved. After separating lithium carbonate, the mother liquor, and the acid (H*ₐA*) combine with the carbonate (*Q*₂(CO₃)*_{q}* where (*Q*) = any cation) in an agitated vessel under the collection of the released CO₂ required to convert LiOH into Li₂CO₃. A solution or suspension containing the salt (*QₐA_{q}*), is recycled internally to provide the anion (*A*) used for selective lithium extraction and re-extraction. The cation (*Q*) combines with the anion (*A*') suited for leaching in a preferred embodiment. After lithium extraction, the by-product recovery (*Q_{a'}A'_{q}*) occurs with the above mentioned methods.

### DESCRIPTION OF THE FIGURES

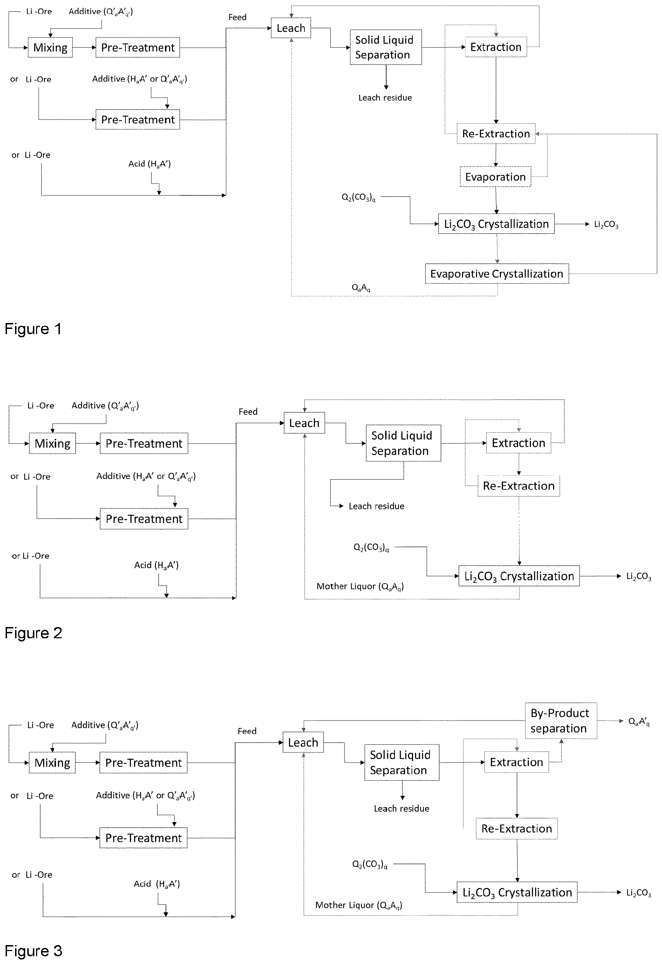

Figure 1 shows the production of Li₂CO₃ from solid lithium resources applying DLE and crystallization (here: evaporative crystallization). In this embodiment, the salt (*QₐA_{q}*) from internal recycling is added as a solid during leaching in an amount related to the molar concentration of lithium in the leach solution to avoid enrichment of the anion (*A*) by recycling the leach solution. After the separation of the leach residue, the leach solution is subjected to selective lithium extraction after solid-liquid separation, which allows the lithium-depleted leach solution to reabsorb lithium so that the leaching of lithium with fresh feedstock becomes effective. After re-extraction of the lithium salt (Li*ₐA*) and evaporation to adjust the optimum concentration of (Li*ₐA*) for the following lithium carbonate precipitation, the salt (*Q*₂(CO₃)*_{q}*) is added to the concentrated lithium salt solution to produce poorly soluble Li₂CO₃ and the fully dissolved salt (*QₐA_{q}*). The recovery of the salt (*QₐA_{q}*) takes place after the separation of the produced Li₂CO₃ by applying a crystallization process (here: an evaporative crystallization) adapted to the mother liquor constituents. The condensates resulting from the evaporation processes flow back to lithium re-extraction, and the recovered salt (*QₐA_{q}*) acts as an additive to the leaching step, thus closing the cycle of the anion (*A*).
Figure 2 shows the production of Li₂CO₃ from solid lithium resources applying DLE only. In figure 2 the process as described in figure1 is modified to omit evaporative crystallization. Here, the leach residue binds an essential amount of water, and requires the recycling of (*QₐA_{q}*) dissolved in the lithium carbonate mother liquor to establish the required water balance. In that case, the step of evaporative crystallization is omitted.
Figure 3: Production of Li₂CO₃ from solid lithium resources applying DLE and recovery of by-product. Figure 3 shows the same process described in figure 2 above, recovering the anion (*A*') as salt (*Q_{a'}A'_{q}*). Here, during the leaching process additional valuable components from the feedstock are extracted to such an extent that their recovery becomes valuable. This recovery requires an additional process step causing an oversaturation and crystallization of the component (*Q_{a'}A'_{q}*), e.g. by evaporation and/or cooling crystallization, forcing this component to crystallize. After solid-liquid separation, the leach liquor impoverished from lithium and (*Q_{a'}A'_{q}*) flows back to the leaching step.

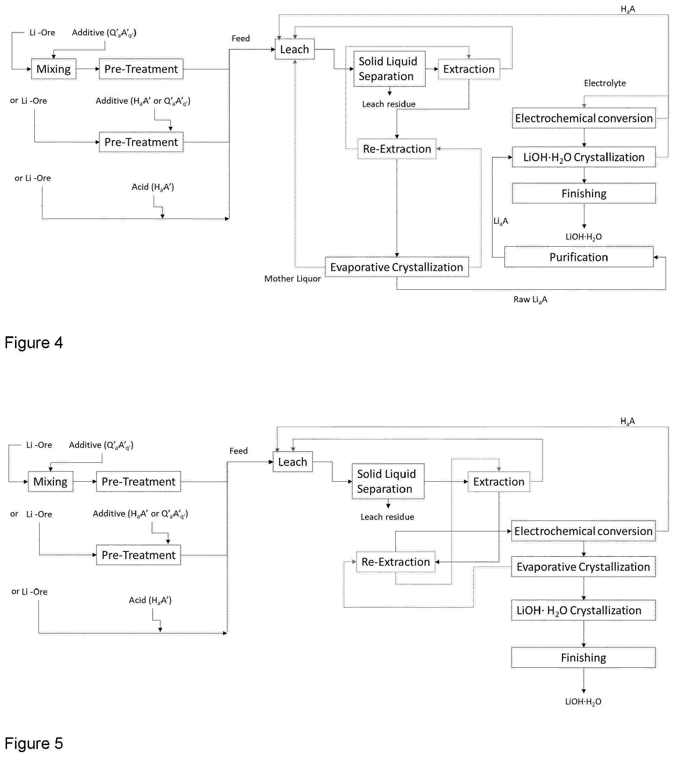

Figure 4 shows the production of lithium hydroxide monohydrate from solid lithium resources applying DLE, crystallization of a lithium salt followed by electrochemical conversion and crystallization of the product.
Figure 5 shows the production of lithium hydroxide monohydrate from solid lithium resources applying DLE, electrochemical conversion of a lithium salt followed by evaporative crystallization and crystallization of the product.

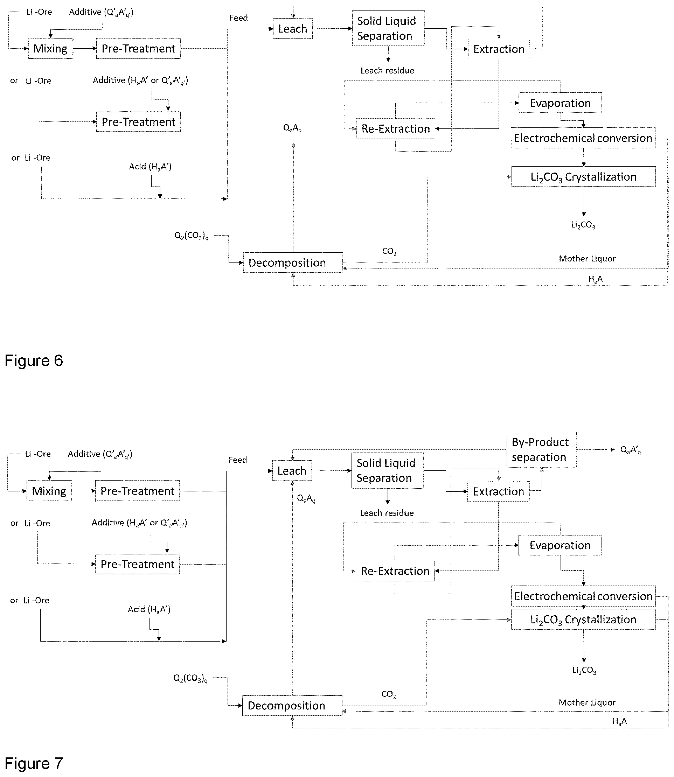

Figure 6 shows the production of low or zero sodium lithium carbonate from solid lithium resources applying DLE, evaporation, electrochemical conversion of a lithium salt followed by lithium carbonate crystallization by aeration with CO₂.
Figure 7 shows the production of low or zero sodium lithium carbonate from solid lithium resources applying DLE, evaporation, electrochemical conversion of a lithium salt followed by lithium carbonate crystallization by aeration with CO₂ and recovery of by-product.

### EXAMPLES

### EXAMPLE 1:

Example 1 explains the embodiment based on precipitating a lithium compound using phosphate as anion (*A*). The example further shows the subsequent production of lithium hydroxide. Phosphate is recovered as CaHPO₄ using Ca(OH)₂ and by further evaporation.

To produce a start solution, 726 g of synthetic LiOH with a temperature of 20 °C are added to 27.89 kg of a (synthetic) leach liquor with a temperature of 60 °C. The mixture is stirred at a temperature of 60 °C for about 1 hour and the solid contents are separated by filtration to obtain 23 g of Ca(OH)₂ and 28.59 kg of start solution. The synthetic leach liquor is prepared as follows: 23.58 kg H₂O, 709 g Li₂SO₄, 1415 g Na₂SO₄, 2122 g K₂SO₄, 26 g Ca(OH)₂ and 38 g CaSO₄. The synthetic LiOH is prepared as follows: 635 g H₂O, 82 g LiOH, 3 g Na₂SO₄, 5 g K₂SO₄ and 2 g [NH₄]₂SO₄.

To precipitate lithium phosphate 5.64 kg of a 15% [NH₄]₃PO₄ solution (4.79 kg H₂O and 846 g [NH₄]₃PO₄) are added to 28.59 kg of the start solution. The resulting mixture is stirred at a temperature of 60 °C for about 1 hour before the precipitated Li₃PO₄ is separated by centrifugation to obtain 707 g of Li₃PO₄ and 33.46 kg of centrifugate.To re-dissolve lithium phosphate, 707 g of Li₃PO₄ obtained from the aforementioned step is suspended in 14.22 kg H₂O and bubbled with 457 g CO₂ at a temperature of 20 °C resulting in the formation of 15,39 kg of a LiH₂PO₄/ LiHCO₃ solution.

To precipitate CaHPO₃, 1921 g of 20 % lime milk (1537 g H₂O, 384 g Ca(OH)₂) and 228 g of CO₂ are added to 15.39 kg of the LiH₂PO₄/ LiHCO₃ solution and the mixture is stirred at a temperature of 20 °C for about 1 hour. The formed CaHPO₄ (820 g) is separated by centrifugation to obtain 16.71 kg of a 6.3 % LiHCO₃ solution. To precipitate CaCO₃ from the LiHCO₃ solution 5734 g of 20 % lime milk (4587 g H₂O, 1248 g Ca(OH)₂) are added to 16.71 kg of the LiHCO₃ solution. The mixture is stirred for about 1 hour at a temperature of 70 °C to precipitate CaCO₃. The CaCO₃ is separated by centrifugation to obtain 1721 g of CaCO₃ and 20.73 kg of a 1.8 % LiOH solution.

To crystallize lithium hydroxide monohydrate 720 g of synthetic LiOH, wash Liquor and 6537 g of synthetic LiOH are added to 20.73 kg of the LiOH re-extraction solution resulting from the previous step.

From this mixture further phosphate is recovered as follows: 19.50 kg of Water are evaporated at a temperature of 100 °C and the precipitated mixture of Ca(OH)₂/Ca₃(PO₄)₃ (6 g) is separated by filtration.

From the obtained concentrated LiOH solution additional 510 g of H₂O are evaporated in vacuum. The resulting evaporation mother liquor is cooled to a temperature of 20 °C and the precipitated LiOH·H₂O is separated by centrifugation to obtain 700 g of LiOH·H₂O and 7263 g of LiOH.

The synthetic LiOH wash liquor is prepared as follows: 636 g H₂O, 82 g LiOH, 0.3 g Na₂SO₄. 0.4 g K₂SO₄, 0.2 g [NH₄]₂SO₄. The synthetic LiOH ML is prepared as follows: 6537 g H₂O, 737 g LiOH, 27 g Na₂SO₄, 40 g K₂SO₄, 0.3 g CaCO₃, 2 g CaHPO₄ and 17 g [NH₄]₂SO₄.

The purification of lithium hydroxide monohydrate is carried out with 945 g of H₂O at a temperature of 90 °C added to 4987 g of synthetic LiOH wash liquor and added by 700 g of the LiOH·H₂O obtained from the step before. The mixture is heated to a temperature of 100°C, stirred for about 1 hour and filtered to remove any remaining Ca(OH)₂/Ca₃(PO₄)₃ impurities. From the filtrate 405 g of water are evaporated and the evaporation mother liquor is cooled to a temperature of 20 °C. The precipitated LiOH·H₂O is separated by centrifugation to obtain 521 g of LiOH·H₂O and 5707g of LiOH wash liquor. The resulting 521 g crystallizate is dried in vacuum at a temperature of 60 °C to obtain 500 g of dry LiOH·H₂O. The synthetic LiOH wash liquor is prepared as follows: 4412 g H₂O, 569 g LiOH, 2 g Na₂SO₄. 3 g K₂SO₄, 0.1 g CaHPO₄ and 1 g [NH₄]₂SO₄.

The remaining leach liquor after lithium phosphate precipitation (33.46 kg) is mixed with 2490 g of 20 % lime milk (1992 g H₂O, 498 g of Ca(OH)₂) and the mixture is stirred at a temperature of 40 °C for about 1 hour and stripped with air to remove the released ammonia. The precipitated CaSO₄·2H₂O is separated by centrifugation to obtain 1186 g of CaSO₄·2H₂O and 34.53 kg of mother liquor. The remaining liquor is ready to use for a renewed lithium leach from a lithium-bearing solid material.

As the synthesized mother liquors are assigned to internal circulation the only lithium entry to the process is the leach liquor. Under this aspect the amount of 500 g lithium hydroxide monohydrate as the product in comparison to 709 g of Li₂SO₄ dissolved in the synthetic leach liquor represent a primary lithium recovery of 92 %.

### EXAMPLE 2:

**Example** 2 is an embodiment of direct lithium extraction via solvent extraction.

The synthetic leach liquor is prepared as follows: 23.58 kg H₂O, 709 g Li₂SO₄, 1415 g Na₂SO₄, 2122 g K₂SO₄, 26 g Ca(OH)₂ and 38 g CaSO₄.

This solution is mixed with 82.6 g of hydrochloric acid 31 % to neutralize the solution and with 1820 g of sodium chloride.

The resulting solution is then sent to a vessel where it is mixed with a hydrophobic organic liquid phase containing: 1). hydrophobic lithium ion exchange molecules/extractants allowing lithium complexation with a LogK value of which, in methanol at 25 °C, is greater than 2 and, 2). specifically designed hydrophobic anion solvating molecules with a pKa value of which, in water at 25 °C, is greater than 9 and lower than 15 and, 3). a supporting hydrophobic diluent allowing solubilization of both organic compounds and the associated extracted (Li*ₐA*) salt (a = 1 for (*A*) = chloride ion here).

After liquid-liquid phase separation the lithium pregnant organic solvent is scrubbed three times with a total of 0.5 kg of water in a counter current manner before being heated to 80°C and mixed with 6 kg hot water to re-extract lithium and chloride into the aqueous phase.

The hydrophobic organic extraction phase after liquid-liquid separation is ready for a new use. Thus, the lithium transferred from the leach solution into the re-extraction solution amounts approx. 84 % of the overall amount of lithium in the synthetic leach liquor.

The leach solution before and after extraction and the re-extraction solution show the following composition - see table 1:

**Table 1**

| Component | unit | Leach solution before extraction | Leach solution after extraction | Re-extraction solution |
|---|---|---|---|---|
| LiCl | g/1000 gH₂O | 9.85 | 1.6 | 82.5 |
| Na₂SO₄ | ppm_{wt} | 76,576 | 76,576 | <1 |
| K₂SO₄ | ppm_{wt} | 71,231 | 71,231 | <1 |
| CaSO₄ | ppm_{wt} | 2,878 | 2,878 | <1 |
| CaCl₂ | ppm_{wt} | 29,871 | 29,831 | 400 |
| NaCl | ppm_{wt} | 37,106 | 36,976 | 1,300 |
| Flowrate | ton/hour | 1,000 | 1,000 | 100 |

Re-extraction solution appears to be 98 %wt pure in LiCI (water excluded).

### EMBODIMENTS OF THE INVENTION

1. A method for recovering lithium from raw material, comprising the following steps:
   a) adding an anion (*A*), as a component of a salt or an acid, to lithium containing material,
   wherein anion (*A*) is added
   a1) to an aqueous leach solution in order to separate lithium from the aqueous leach solution, wherein lithium is extracted from the leach solution into a separate lithium-containing phase, or
   a2) after lithium separation from an aqueous leach solution, wherein lithium is extracted from the leach solution into a separate lithium-containing phase, to the separate lithium-containing phase to re-introduce lithium into an aqueous re-extraction solution.

Preferably, the anion (*A*) is beneficial for selective lithium extraction from the leach solution; more preferably anion (*A*) is added in an amount suitable to establish a high concentration of lithium in the aqueous re-extraction solution achieving a concentration increase by at least a factor of 3, preferably by at least a factor of 5, even more preferably by at least a factor of 10, even more preferably by at least a factor of 15, even more preferably by at least a factor of 20, even more preferably by at least a factor of 25, and most preferably 30 and more compared to the leach solution.

More preferably, the method comprises
a. pre-treating a lithium salt raw material by adding an anion (A) as a component of a salt or an acid, preferably in a solid form to the raw material, wherein the anion (*A*') is suitable for lithium extraction from the solid resource; and
b. leaching of the lithium-containing solid resource after step a. according to a known leaching process to obtain a leach solution,
c. adding an anion (*A*), e.g. as a component of a salt or an acid, to lithium containing material,
   wherein anion (*A*) is added
   c1) to the aqueous leach solution in order to separate lithium from the aqueous leach solution, wherein lithium is extracted from the leach solution into a separate lithium-containing phase, or
   c2) after lithium separation from an aqueous leach solution, wherein lithium is extracted from the leach solution into a separate lithium-containing phase, to the separate lithium-containing phase to re-introduce lithium into an aqueous re-extraction solution.

2. The method of item 1, wherein lithium is extracted from the leach solution into a separate lithium-containing phase
2.i) by phase transfer, namely
   2.i.1) by a transfer to a solid adsorbent, or
   2.i.2) by a transfer to a liquid organic phase;
   2.i.3) by lithium precipitation using anion (*A*), thereby forming a solid lithium containing phase,
      followed by a subsequent transfer of lithium back into an aqueous solution; or
2.ii) by lithium precipitation using anion (*A"*), thereby forming a solid lithium containing phase, followed by re-dissolution of the separated lithium containing precipitate into an aqueous solution by adding anion (*A*).

The aqueous solution obtained, e.g. in 2.i) or 2.ii), is denominated "re-extraction solution".

In one embodiment, in 2.i.1) anion (*A*) may be used to effect adsorption of a lithium salt (Li*ₐA*) to an adsorbent or to desorb a lithium salt (Li*ₐA*) adsorbed to the adsorbent to transfer lithium back to the aqueous solution.

In another embodiment, in 2.i.2) anion (*A*) may be used to effect transfer of a lithium salt (Li*ₐA*) to the hydrophobic organic liquid phase. Preferably, complex forming molecules/extractants and anion solvating molecules are added to complex and solvate the lithium salt (e.g. Li*ₐA*) in the organic phase and to allow transfer of the lithium salt (e.g. Li*ₐA*) to the organic phase. Complex forming molecules/extractants are preferably selected from, and not limited to functionalized calixarene, hydrophobic 14-crown-4 ether, or hydrophobic [2.2.1] or [2.1.1] cryptand, in combination to anion solvating molecules based on hydrophobic and protic organic compounds allowing anionic compound solvation for (Li*ₐA*) solvation, extraction and dissolution in common organic diluents selected from kerosine, ethers, halogenated alkanes and polar aromatic solvents, or mixtures thereof.

Preferably, the lithium depleted leach liquor after lithium removal may be returned to the leaching process.

More preferably, the obtained re-extraction aqueous solution contains lithium as a salt (Li*ₐA*) in a concentration higher than 0.5 kg per cubic metre, preferably higher than 3 kg per cubic metre and most preferably higher than 10 kg per cubic metre.

In all embodiments, a is the valence of the anion (*A*), e.g. a = 1, 2 or 3 depending on the lithium extraction chosen solution and on the valence of the associated anion (*A*), which can be taken from 1, 2 or 3.

In one specific variant, a method for extracting lithium from a leach solution is provided, wherein the anion (*A*) is chloride, preferably as alkaline or alkaline-earth chloride, with the provision that the alkaline chloride is not LiCI, wherein a calixarene is used to transfer the lithium as LiCI into the organic phase, followed by subsequently transferring lithium back into an aqueous solution, i.e. the re-extraction solution.

Preferably, a recovery yield of at least 85 %, most preferably at least 90 % of lithium is achieved compared to the amount of lithium in the leach solution, and the recovery rate for all other cations individually is less than 10 %, most preferably less than 1 % compared to the respective amounts of said cations in the leach solution..

More preferably, lithium is concentrated by a factor of at least 3 compared to the amount in the original leach solution, more preferably at least by factor 5 and most preferably at least by factor of 8.

In another second specific variant, a method for recovering lithium from raw material is provided, wherein the anion (*A*) is phosphate, preferably as a phosphate of one or more of the cations Na, K, and/or NH₄, wherein lithium is precipitated as Li₃PO₄ under adjustment of pH-value to precipitate Li₃PO₄ quantitatively, followed by subsequently transferring lithium back into an aqueous solution, i.e. the re-extraction solution.

Preferably, transferring lithium back into said aqueous solution is achieved by adding CO₂ (g) under pressure preferably below 500 kPa, most preferrably below 150 kPa, into an aqueous medium containing the Li₃PO₄ precipitate.

More preferably, the phosphate is subsequently precipitated as CaHPO₄ in the presence of Ca(OH₂) (e.g. as lime) and COz(g).

In a further preferred embodiment of the second variant - with or without the above phosphate precipitation - LiOH is subsequently produced, wherein CaCO₃ is subsequently stepwise precipitated from the remaining LiHCO₃ solution by adding Ca(OH₂) (e.g. as lime) and, optionally, the obtained solution is further processed to recover the remaining lithium hydroxide monohydrate with conventional process steps, e.g. evaporation, precipitation or crystallization.

Remaining ions can be recovered as salt of the type (*Q_{a'}A'_{q}*) or as ammonia, or as gypsum by adding lime.
3. The method of item 2, wherein the re-extraction aqueous solution is further concentrated until saturation or supersaturation of the lithium salt (Li*ₐA*) and/or other brine components.

Optionally, the lithium salt (Li*ₐA*) is crystallized and separated from the re-extraction aqueous solution.
4. The method of item 2 or 3, wherein the lithium salt is recovered from the re-extraction solution in crystalline form.

Preferably, the lithium salt is lithium carbonate, more preferably low-sodium lithium carbonate containing less than twenty parts per one million of sodium

Equally preferably, the lithium salt is lithium hydroxide monohydrate, which may be obtained from the re-extraction solution by using known process steps.
5. The method of any of items 1-4, including a step of recovering anion (A) and/or water from the re-extraction solution.

Preferably, the anion (*A*) and water are returned to the re-extraction process.
6. The method of any of items 1-5, wherein an overall lithium yield of more than 10 %, preferably 20 %, more preferably more than 40 %, even more preferably more than 50 %, further preferably more than 60 %, even more preferably more than 75%, most preferably more than 85 %, is obtained.

The overall lithium yield in this specification refers to the ratio between the amount of recovered lithium in the final product and the amount of lithium in the raw material.

The yield eliminates the need for costly leach brine purification and minimizes water evaporation to concentrate Li in the leach solution and the re-extraction solution, respectively and thus may create a process that is free of liquid effluents.

The methods of the present invention may lead to a lithium yield of the re-extraction solution of more than 10 %, preferably 20 %, more preferably more than 40 %, even more preferably more than 50 %, further preferably more than 60 %, even more preferably more than 75%, more preferably more than 85 %, most preferably more than 90 %.

The lithium yield of the re-extraction solution in this specification refers to the ratio between the amount of recovered lithium in the re-extraction solution and the amount of lithium in the raw material.
7. Use of anion (*A*) for extracting lithium from an aqueous solution,
wherein lithium is extracted from an aqueous leach solution into a separate lithium-containing phase
i) by removal of lithium from the aqueous solution by phase transfer to another phase, for example:
   i1) by a transfer to a solid adsorbent, or
   i2) by a transfer to a liquid organic phase,
   and a subsequent transfer of lithium back to an aqueous re-extraction solution; or
ii) by lithium precipitation using anion (*A*), and re-dissolution of the separated lithium containing precipitate into an aqueous re-extraction solution.

Preferably, the lithium depleted leach liquor after lithium removal may be returned to the lithium solution.

More preferably, the obtained aqueous re-extraction solution contains lithium as a salt (Li*ₐA*) (a = 1, 2 or 3 depending on the valence of the anion (*A*)) in a concentration higher than 0.5 kg per cubic metre, preferably higher than 3 kg per cubic metre and most preferably higher than 10 kg per cubic metre.
8. The method according to any of items 1-6 or the use of item 7 for producing lithium carbonate, further comprising:
adding an aqueous solution comprising carbonate (*Q*₂(CO₃)*_{q}*), wherein (*Q*) is a metal cation of valence *q*, to the re-extraction aqueous solution containing the dissolved lithium salt (Li*ₐA*), to form Li₂CO₃ as a final product.

Preferably, Li₂CO₃ is separated from the aqueous solution, e.g. in crystalline form.

More preferably, the remaining mother liquor is evaporated to recover a second reaction product (*QₐA_{q}*) as a crystalline solid, wherein (*Q*) is a cation, which may or may not be (*Q'*). Even more preferably, anion (*A*), so obtained as (*QₐA_{q}*), can be reused in the method of the invention.
9. The method or use according to item 8, wherein the mother liquor containing the second reaction product (*QₐA_{q}*) is recycled and used up-stream in a closed production process of Li₂CO₃.
10. The method, according to any of items 1-6 or the use of item 7 for producing lithium hydroxide monohydrate, further comprising
   adding an aqueous solution comprising hydroxide (*Q*(OH)*_{q}*), wherein (*Q*) is a metal cation of valence *q*, to the re-extraction aqueous solution containing the dissolved lithium salt (Li*ₐA*), to form LiOH as a final product.

Preferably, Li₂OH is separated from the aqueous solution, e.g. in crystalline form.

More preferably, (*Q*(OH)*_{q}*) is produced electrochemically, e.g. the re-extraction solution comprising (Li*ₐA*) is used for the electrochemical production of lithium-hydroxide monohydrate. Even more preferably, the acid (H*ₐA*) used in the electrochemical production is internally recycled. Most preferably the acid (H*ₐA*) in the electrochemical production is used in a closed process.
11. The method or use according to item 10, wherein the re-extraction solution is used directly for electrochemical conversion of the dissolved lithium salt (Li*ₐA*) to produce a catholyte solution containing lithium hydroxide LiOH.

Preferably, the electrochemical conversion further generates an anolyte solution comprising the acid (H*ₐA*) to provide the anion (*A*) for selective lithium extraction or carbonate gasification to CO₂.

More preferably, the lithium hydroxide monohydrate is crystallized from said catholyte solution.
12. The method or use according to any of items 8-11 for recovering low-sodium lithium carbonate, wherein the re-extraction solution is used directly for electrochemical conversion of the dissolved lithium salt (Li*ₐA*) to produce a catholyte solution containing lithium hydroxide LiOH, and low-sodium lithium carbonate is subsequently crystallized by mixing the catholyte solution with carbon dioxide in aqueous solution.

Preferably, the carbon dioxide in aqueous solution is generated by guiding the anolyte containing the acid (H*ₐA*) to a mixing reactor to contact it with a commercial carbonate (*Q*₂(CO₂)*_{q}*) to release said carbon dioxide required for low sodium carbonate production and to guide the resulting mother liquor containing the dissolved salt (*QₐA_{q}*) back to provide the anion (A) for selective lithium extraction.

In a preferred embodiment, the cation (*Q*) introduced with the commercial carbonate is recovered from the process by mixing the salt (*QₐA_{q}*), recovered from the mother liquor with the leach solution from the process by first extracting the anion (*A*) together with the lithium, whereby the cation (*Q*) and the anion (*A*) used for leaching the lithium may accumulate in the leaching solution due to the recirculation of the salt (*Qₐ-A'q*) , so that after the salt (*Q_{a'}A'q*) has been supersaturated by cooling or evaporation or salting out, it crystallizes and is recovered as a by-product of the process.
13. The method according to any of items 1-6 and 8-12, in which one anion selected from fluoride, chloride, chlorate, perchlorate, bromide, hydroxide, sulphate, nitrate, phosphate, carbonate, silicate, borate is used as anion (*A'*) to extract lithium from a solid raw material.
14. The method according to item 13, in which one anion among the group chloride, sulphate, nitrate, carbonate is used as anion (*A'*) to extract lithium from the solid raw material.
15. The method according to item 14 in which sulphate is used as said anion (*A'*) to extract lithium from the solid raw material.
16. The method according to any of items 1-6 or 8-15 or the use according to any of items 7-15, in which one anion selected from fluoride, chloride, chlorate, perchlorate, bromide, hydroxide, sulphate, nitrate, phosphate, carbonate, silicate, borate is used as anion (*A*) to selectively extract lithium from the leach solution.
17. The method or use according to item 16, in which one anion selected from chloride, sulphate, nitrate, carbonate or phosphate is used as anion (*A*) to selectively extract lithium from the leach solution.
18. The method or use according to item 17, in which chloride or phosphate is used as said anion (*A*) to selectively extract lithium from the leach solution.
19. The method or use according to any of items 8-18, in which one cation selected from alkaline metals, alkaline earth metals or ammonium is used as cation (*Q*) to provide a commercial carbonate required to produce lithium carbonate or low-sodium lithium carbonate.
20. The method or use according to item 19 in which one cation selected from ammonium, sodium, potassium, magnesium or calcium is used as said cation (*Q*) to provide a commercial carbonate required to produce lithium carbonate or low-sodium lithium carbonate.
21. The method according to item 20, in which sodium or calcium is used as said cation (Q) to provide a commercial carbonate required to produce lithium carbonate or low-sodium lithium carbonate.
22. A method for recovering lithium from raw material comprising:
   A) adding an anion (*A*'), as acid or solid compound, to the lithium raw material to optimize lithium leaching from the raw material and
   B) adding an anion (*A*), as a salt or an acid, wherein (*A*) is beneficial for selective lithium extraction from the leach solution.

## Claims

1. A method for recovering lithium from raw material, comprising following steps:
a) adding an anion (*A*), as a component of a salt or an acid, to lithium containing material,
wherein anion (*A*) is added
a1) to an aqueous leach solution in order to separate lithium from the aqueous leach solution, wherein lithium is extracted from the leach solution into a separate lithium-containing phase, or
a2) after lithium separation from an aqueous leach solution, wherein lithium is extracted from the leach solution into a separate lithium-containing phase, to the separate lithium-containing phase to re-introduce lithium into an aqueous re-extraction solution.

2. The method of claim 1 comprising:
a. pre-treating a lithium salt raw material by adding an anion (*A'*) as a component of a salt or an acid, preferably in a solid form to the raw material, wherein the anion (*A'*) is suitable for lithium extraction from the solid resource; and
b. leaching of the lithium-containing solid resource after step a. according to a known leaching process to obtain a leach solution,
c. adding an anion (*A*), e.g. as a component of a salt or an acid, to lithium containing material,
wherein anion (*A*) is added
c1) to the aqueous leach solution in order to separate lithium from the aqueous leach solution, wherein lithium is extracted from the leach solution into a separate lithium-containing phase, or
c2) after lithium separation from an aqueous leach solution, wherein lithium is extracted from the leach solution into a separate lithium-containing phase, to the separate lithium-containing phase to re-introduce lithium into an aqueous re-extraction solution.

3. The method of claim 1 or 2, wherein lithium is extracted from the leach solution into a separate lithium-containing phase
3.i) by phase transfer, namely
3.i.1) by a transfer to a solid adsorbent, or
3.i.2) by a transfer to a liquid organic phase;
3.i.3) by lithium precipitation using anion (*A*), thereby forming a solid lithium containing phase,
followed by a subsequent transfer of lithium back into an aqueous solution; or
3.ii) by lithium precipitation using anion (*A*"), thereby forming a solid lithium containing phase, followed by re-dissolution of the separated lithium containing precipitate into an aqueous solution by adding anion (*A*).

4. The method of any of claims 1-3, wherein the lithium salt is recovered from the obtained aqueous solution, denominated "re-extraction solution", in crystalline form.

5. The method of any of claims 1-4, including a step of recovering anion (*A*) from the re-extraction solution.

6. The method of any of claims 1-5, wherein an overall lithium yield of more than 40 % is obtained.

7. Use of anion (*A*) for extracting lithium from an aqueous solution,
wherein lithium is extracted from an aqueous leach solution into a separate lithium-containing phase
i) by removal of lithium from the aqueous solution by phase transfer to another phase, for example
i1) by a transfer to a solid adsorbent, or
i2) by a transfer to a liquid organic phase,
and a subsequent transfer of lithium back to an aqueous re-extraction solution; or
ii) by lithium precipitation using anion (*A*), and re-dissolution of the separated lithium containing precipitate into an aqueous re-extraction solution.

8. The method according to any of claims 1-6 or the use of claim 7 for producing lithium carbonate, further comprising
adding an aqueous solution comprising carbonate (*Q*₂(CO₃)*_{q}*), wherein (*Q*) is a metal cation of valence *q*, to the re-extraction aqueous solution containing the dissolved lithium salt (Li*ₐA*), to form Li₂CO₃ as a final product.

9. The method or use according to claim 8, wherein the mother liquor containing the reaction by-product (*QₐA_{q}*) is recycled and used up-stream in a closed production process of Li₂CO₃.

10. The method, according to any of claims 1-6 or the use of claim 7 for producing lithium hydroxide monohydrate, further comprising
adding an aqueous solution comprising hydroxide (*Q(OH)_{q}*)*,* wherein (*Q*) is a metal cation of valence *q*, to the re-extraction aqueous solution containing the dissolved lithium salt (Li*ₐA*), to form LiOH, or LiOH·H₂O as a final product.

11. The method or use according to claim 10, wherein the re-extraction solution is used directly for electrochemical conversion of the dissolved lithium salt (Li*ₐA*) to produce a catholyte solution containing lithium hydroxide LiOH.

12. The method or use according to any of claims 8-11 for recovering low-sodium lithium carbonate, wherein the re-extraction solution is used directly for electrochemical conversion of the dissolved lithium salt (Li*ₐA*) to produce a catholyte solution containing lithium hydroxide LiOH, and low-sodium lithium carbonate is subsequently crystalized by mixing the catholyte solution with carbon dioxide in aqueous solution.

13. The method according to any of claims 2-6 and 8-12, in which one anion selected from fluoride, chloride, chlorate, perchlorate, bromide, hydroxide, sulphate, nitrate, phosphate, carbonate, silicate, borate is used as anion (A) to extract lithium from a solid raw material.

14. The method according to any of claims 1-6 or 8-13 or the use according to any of claims 7-13, in which one anion selected from fluoride, chloride, chlorate, perchlorate, bromide, hydroxide, sulphate, nitrate, phosphate, carbonate, silicate, borate is used as anion (A) to selectively extract lithium from the leach solution.

15. A method for recovering lithium from raw material comprising
A. adding an anion, (A), as acid or solid compound, to the lithium raw material to optimize lithium leaching from the raw material and
B. adding an anion (A), as a salt or an acid, wherein (A) is beneficial for selective lithium extraction from the leach solution.
